# EUROPEAN PATENT SPECIFICATION

(11) **EP 3 659 806 B1**
(45) Date of publication and mention of the grant of the patent: **15.03.2023**
(21) Application number: 19212264.6
(22) Date of filing: 28.11.2019
(51) Int. Cl.: B32B 15/04

(54) **ADDITIVE MANUFACTURING METHOD AND ADDITIVE MANUFACTURING APPARATUS**
VERFAHREN ZUR GENERATIVEN FERTIGUNG UND VORRICHTUNG ZUR GENERATIVEN FERTIGUNG
PROCÉDÉ ET APPAREIL DE FABRICATION ADDITIVE

(30) Priority: 30.11.2018 JP 2018225100
(43) Date of publication of application: 03.06.2020
(73) Proprietor: National University Corporation Nagoya University, Aichi-ken 464-8601 (JP); OKUMA CORPORATION, Aichi 480-0193 (JP)
(72) Inventor: SHAMOTO, Eiji, NAGOYA-SHI, AICHI-KEN, Aichi 464-8601 (JP); AOYAMA, Kota, NAGOYA-SHI, AICHI-KEN, Aichi 464-8601 (JP); HAYASAKA, Takehiro, NAGOYA-SHI, AICHI-KEN, Aichi 464-8601 (JP)
(74) Representative: Algemeen Octrooi- en Merkenbureau B.V.

(56) References cited:
- EP-A1- 0 775 550
- WO-A1-2018/142392
- JP-A- 2006 123 154
- JP-A- 2011 173 163
- US-A1- 2017 144 426

## Description

The present disclosure relates to an additive manufacturing method according to the preamble of claim 1 and an additive manufacturing apparatus according to the preamble of claim 8, for forming a laminated structure by repetition of lamination and machining of one or plural metal plates each time.

Friction stir welding (FSW) is a technique for welding plural metal plates by inserting a dedicated tool into the plate while rotating the tool at high speed to soften the material by the generated frictional heat and then causing the material near the location where the tool is inserted to be plastically flowed and mixed by rotational force. Friction stir welding is generally applied to butt joints, but is also applied to lap joints.

JP 2006-123154 A discloses a machining apparatus configured to slice a three-dimensional shape represented in the form of digital information into a set of cross-sectional shapes along plural virtual parallel planes and form a three-dimensional object including plates laminated by friction stir welding. The machining apparatus disclosed in JP 2006-123154 A removes an unnecessary portion, which is not included in the corresponding cross-sectional shape, from the plate by means of machining. Subsequently, the machining apparatus joins, by friction stir welding, a new plate to the plate from which the unnecessary portion has been removed and removes an unnecessary portion, which is not included in the next cross-sectional shape, from the new plate by means of machining. The machining apparatus disclosed in JP 2006-123154 A forms a three-dimensional object by repeatedly performing a lamination process and a machining process as many times as necessary.

As disclosed in JP 2006-123154 A, a laminated structure having a desired overall shape can be formed by repetition of the lamination process of laminating a metal plate by friction stir welding and the machining process of machining the metal plate thus laminated into a desired cross-sectional shape. Similarly, EP-0775550 describes an additive manufacturing method according to the preamble of claim 1. However, various devices and improvements are required to put such an additive manufacturing technique into practical use.

The present disclosure has been made in view of such a circumstance, and it is therefore an object of the present disclosure to provide a technique for forming a laminated structure appropriately.

In order to solve the above-described problem, an additive manufacturing method for forming a laminated structure according to the present disclosure and as outlined in the preamble of claim 1, is further characterized by the features of the characterizing part of claim 1.

Another aspect of the present disclosure is an additive manufacturing apparatus configured to form a laminated structure according to claim 8. The additive manufacturing apparatus includes a supply device configured to place a metal plate on a laminate-joined body, a joining device configured to heat the metal plate and the laminate-joined body to join the metal plate and the laminate-joined body, and a machining device configured to machine the one or plural metal plates joined to the laminate-joined body to form a laminate-joined body including the one or plural metal plates laminated on the laminate-joined body. The machining device includes a first machining function of cutting the metal plate to form a partial shape of the laminated structure and a second machining function of finishing a surface of the metal plate.

Note that any combination of the above-described components, or an entity that results from replacing expressions of the present disclosure among a method, an apparatus, a system, and the like is also valid as an aspect of the present disclosure.
Fig. 1 is a diagram illustrating functional blocks of an additive manufacturing apparatus.
Figs. 2A to 2D are diagrams for describing a joining method.
Fig. 3 is a flowchart for describing a basic additive manufacturing procedure.
Figs. 4A to 4J are diagrams illustrating how a cylinder is formed on a layer-upon-layer basis.
Figs. 5A to 5D are diagrams for describing a third process in a first example.
Figs. 6A to 6C are diagrams for describing a problem to be solved in a second example.
Figs. 7A and 7B are diagrams for describing a third process in the second example.
Figs. 8A to 8D are diagrams for describing a joining path.
Fig. 9 is a diagram illustrating joining paths overlapping one another.
Fig. 10 is a diagram illustrating usage of the additive manufacturing apparatus.

The disclosure will now be described by reference to the preferred embodiments. This does not intend to limit the scope of the present invention, but to exemplify the invention.

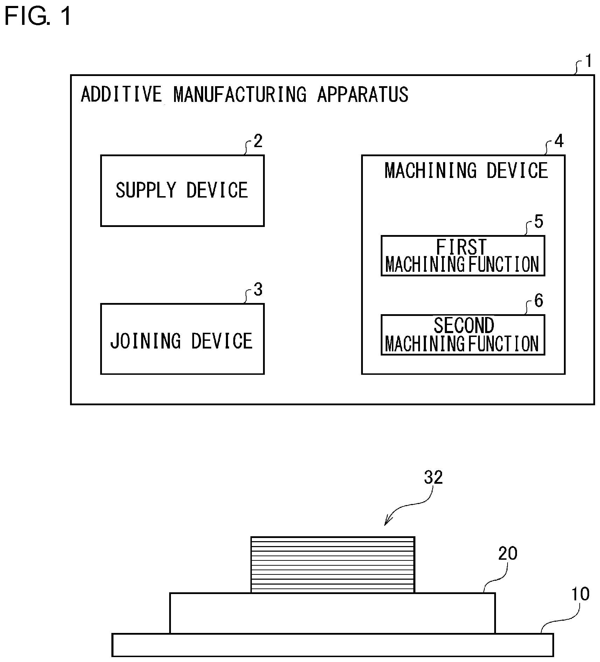

Fig. 1 illustrates functional blocks of an additive manufacturing apparatus 1 of an embodiment. The additive manufacturing apparatus 1 forms a laminated structure 32 having a desired overall shape by repetition of lamination and machining of one or plural metal plates each time. The additive manufacturing apparatus 1 includes a supply device 2, a joining device 3, and a machining device 4. The additive manufacturing apparatus 1 may be a numerical control (NC) machine tool. According to the embodiment, the "laminated structure" denotes a final product manufactured by additive manufacturing, and a formed object at a stage before the final product is referred to as "laminate-joined body".

Laminating a metal plate on a base 20 fixed to a table 10 and machining the metal plate forms the laminated structure 32. The table 10 may be movable or fixed. The base 20 is a metal plate thicker than the metal plate to be laminated, for example, and is fixed to the table 10 with a bolt or the like. The base 20 may finally become a part of the laminated structure. The supply device 2 places and temporarily fixes the metal plate to be laminated on the laminate-joined body, and the joining device 3 heats the metal plate and the laminate-joined body to join the metal plate and the laminate-joined body. The joining device 3 of the embodiment joins the metal plate and the laminate-joined body by friction stir welding, but may perform the joining processing by a different method.

Specific examples of joining methods applicable to the additive manufacturing apparatus 1 of the embodiment will be given below. The joining methods given below all have in common that heating and joining are performed with a metal plate serving as a base material.

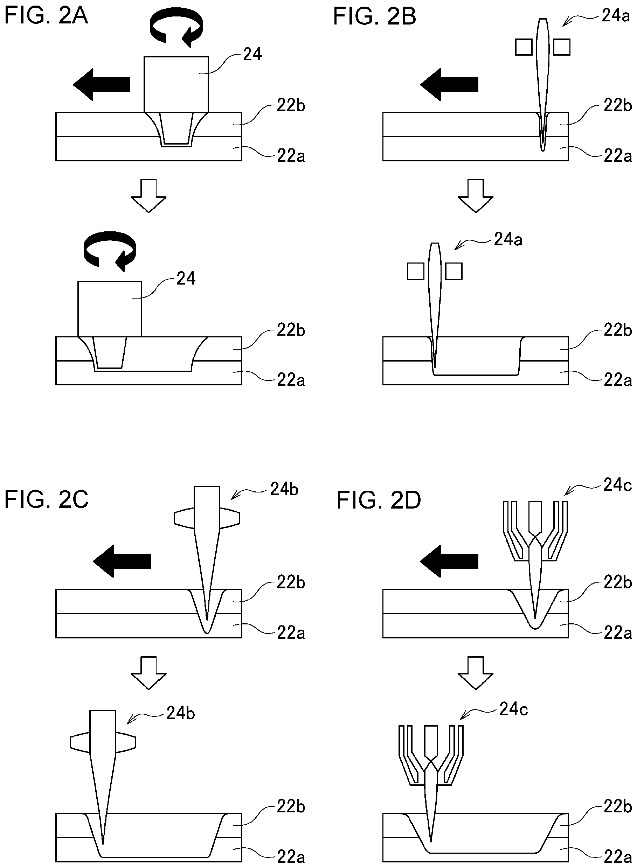

Fig. 2A is a schematic diagram illustrating how friction stir welding is performed. A metal plate 22b is placed and temporarily fixed on a metal plate 22a that is a laminate-joined body. Note that only two layers to be joined are illustrated herein, but at least one metal layer that has been joined to the metal plate 22a may be present under the metal plate 22a. The joining device 3 performs the joining processing on the metal plate 22b from above with the metal plate 22b placed and temporarily fixed on the metal plate 22a.

In friction stir welding, a joining tool 24 called an FSW tool is inserted into the metal plates 22a, 22b that have been laminated while rotating at high speed, and at least either the joining tool 24 or the table 10 on which the metal plates 22a, 22b have been placed is moved in a joining direction. The FSW tool includes a shoulder surface and a probe protruding from a center of the shoulder surface, and the probe is inserted into a part of the metal plate 22a through the metal plate 22b and rotates at high speed. The metal plates 22a, 22b are softened by frictional heat generated by the rotation of the probe and the shoulder surface, and the rotational force causes a base material near a location where the probe has been inserted to plastically flow to be mixed, thereby joining the metal plates 22a, 22b in a solid state. The shoulder surface of the FSW tool also plays a role of suppressing a rise of the softened base material.

Fig. 2B is a schematic diagram illustrating how electron beam welding is performed. In electron beam welding, at least either an electron beam generator 24a or the table 10 on which the metal plates 22a, 22b have been placed is moved in the joining direction with an electron beam generated by the electron beam generator 24a impacting the metal plates 22a, 22b thus laminated. In electron beam welding, the metal plates 22a, 22b are welded by heat energy generated when the electron beam impacts.

Fig. 2C is a schematic diagram illustrating how laser welding is performed. In laser welding, at least either a laser generator 24b or the table 10 on which the metal plates 22a, 22b have been placed is moved in the joining direction with the metal plates 22a, 22b thus laminated irradiated with a laser beam generated by the laser generator 24b and condensed. In laser welding, the metal plates 22a, 22b are welded by heat energy generated by irradiation with the laser beam.

Fig. 2D is a schematic diagram illustrating how plasma welding is performed. In plasma welding, at least either a plasma generator 24c or the table 10 on which the metal plates 22a, 22b have been placed is moved in the joining direction with a plasma arc generated between the metal plates 22a, 22b thus laminated and the plasma generator 24c. In plasma welding, the metal plates 22a, 22b are welded by heat energy generated by the plasma arc.

Note that the plasma welding is a type of arc welding, but TIG welding of a non-consumable electrode type that does not cause an electrode to fuse is also applicable as the joining method for the joining device 3 in the additive manufacturing apparatus 1.

As described above, the joining device 3 may perform the joining processing by any one of the various joining methods using the metal plate 22b and the laminate-joined body (the metal plate 22a in the example illustrated in Figs. 2A to 2D) as the base material. In the embodiment, friction stir welding (see Fig. 2A) is employed. The joining device 3 includes a spindle having the joining tool 24 serving as an FSW tool attached to a tip of the spindle, and may include a capability of moving the spindle relative to the laminated structure along a path calculated by a joining program to be described later.

The machining device 4 machines the one or plural metal plates joined to the laminate-joined body to form a laminate-joined body including the one or plural metal plates laminated on the laminate-joined body. The machining device 4 includes a first machining function 5 of cutting the one or plural metal plates thus laminated to form a partial shape of the laminated structure, and a second machining function 6 of finishing a surface of each of the metal plates joined one by one to make the surface flat. The first machining function 5 and the second machining function 6 may use the same tool, or alternatively, may use different tools. The machining device 4 includes a spindle that allows various tools to be attached to a tip of the spindle, and may include a capability of moving the tool relative to the laminated structure along a path calculated by a machining program to be described later.

The first machining function 5 may cut metal plates surface-finished by the second machining function 6 one by one, or alternatively, may cut the plural joined metal plates by batch. Cutting the plural metal plates by batch makes it possible to reduce process time. Note that the first machining function 5 may machine one or plural metal plates with plural types of cutting tools.

In the additive manufacturing apparatus 1, a supply process of supplying a metal plate performed by the supply device 2, a joining process performed by the joining device 3, and a machining process performed by the machining device 4 are controlled and managed by a metal plate supply program, the joining program, and the machining program, respectively. The additive manufacturing apparatus 1 slices a three-dimensional shape data representing the laminated structure that is the final formed object along plural virtual parallel planes, calculates plural sliced partial cross-sectional shapes, and stores the partial cross-sectional shapes in a memory. Each of the partial cross-sectional shapes (hereinafter, also referred to as "partial shape") is a shape formed by one metal plate and is a target shape in the joining process and machining process on each layer. The partial shape has a plate thickness and may include plural cross-sectional shapes that change in a plate thickness direction. The plural cross-sectional shapes may be calculated at predetermined intervals in the thickness direction.

The joining program reads the partial shape of the metal plate placed on the laminate-joined body from the memory, determines an area to be joined in accordance with a predetermined algorithm, and calculates a relative path of the joining tool 24. The joining tool 24 attached to the spindle is moved relative to the laminate-joined body along the path thus calculated and performs the joining processing of joining the metal plate and the laminate-joined body.

The machining program reads the partial shape of the metal plate joined to the laminate-joined body from the memory, and calculates a path of a cutting tool that cuts the metal plate into the partial shape while finishing the surface of the metal plate. As will be described later, the machining program of the embodiment calculates the path of the cutting tool to leave a region that lies outside and extends from the partial shape for the next or subsequent joining process. Therefore, the machining program needs to know the joining path for the next or subsequent joining process. On the other hand, the joining program needs to know the region lying outside the partial shape left in the last or previous cutting process. Further, the machining program needs to store the region lying outside the partial shape left for the next or subsequent joining process for a subsequent cutting process (the next or subsequent cutting process that is performed before many layers are laminated to make machining with the cutting tool difficult) in which the region is removed.

In the additive manufacturing apparatus 1, the machining program and the joining program may be managed by an integrating program that allows the machining program and the joining program to interface with each other and calculate a region to be cut and a region to be joined, respectively, in accordance with instructions from the integrating program. The cutting tool attached to the spindle is moved along the path thus calculated, finishes the surface of the metal plate, and cuts the metal plate into the partial shape.

The additive manufacturing apparatus 1 of the embodiment performs a placing process, the joining process, and the machining process on the metal plate in accordance with the partial shape of each layer and builds up the laminate-joined body on a layer-by-layer basis. In order to make efficiency higher, the additive manufacturing apparatus 1 may successively perform the placing process, the joining process, and a surface-finishing process on each of the plural metal plates and then perform the cutting process on the plural metal plates. The programs may perform calculations during the formation of the laminated structure, or alternatively, may perform the calculations before the start of formation.

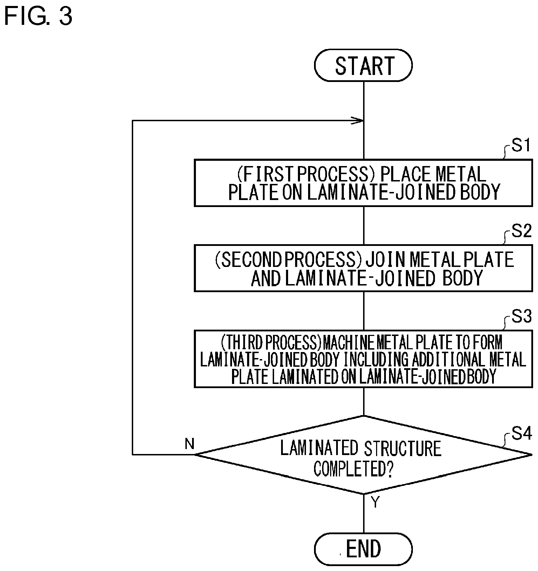

Fig. 3 is a flowchart for describing a basic additive manufacturing procedure on a layer-by-layer basis. The supply device 2 places a metal plate on a laminate-joined body (first process S1). Next, the joining device 3 heats the metal plate and the laminate-joined body to join the metal plate and the laminate-joined body (second process: S2). Subsequently, the machining device 4 machines the metal plate joined to the laminate-joined body to form a laminate-joined body including an additional layer laminated on the laminate-joined body (third process: S3). Until the laminate-joined body formed in the third process becomes a laminated structure (N in S4), the first to third processes are repeatedly performed, and when the laminated structure is completed (Y in S4), the additive manufacturing is brought to an end.

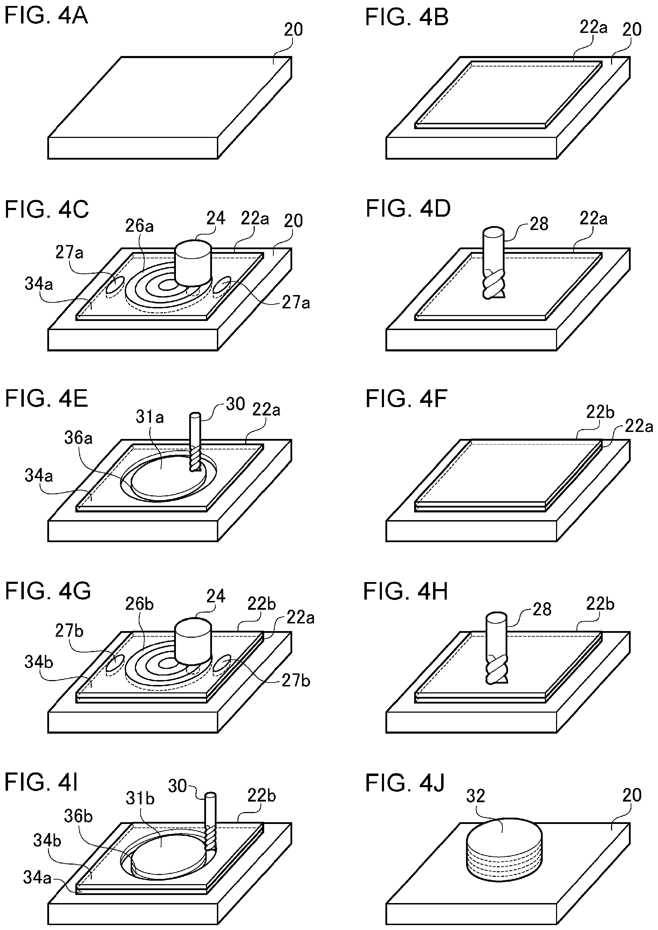

A description will be given of the basic additive manufacturing procedure with reference to Figs. 4A to 4J. Figs. 4A to 4J illustrate how a cylinder is formed on a layer-upon-layer basis.

Fig. 4A illustrates the base 20. As illustrated in Fig. 1, the base 20 is fixed to the table 10.

Fig. 4B illustrates a state where the metal plate 22a has been placed on the base 20 by the supply device 2. Thereafter, the metal plate 22a is machined (see Fig. 4E) into a first layer of the laminated structure 32. The metal plate 22a is temporarily fixed to the base 20 so as not to be misaligned. The metal plate 22a may be temporarily fixed with, for example, an adhesive or a bolt. Note that the supply device 2 may temporarily fix the metal plate 22a to the base 20 to prevent the metal plate 22a from being misaligned relative to the base 20.

Fig. 4C illustrates a state where the joining device 3 joins the metal plate 22a and the base 20 with the joining tool 24. A joining area 26a is an area joined in accordance with a partial shape of the first layer of the cylinder that is the final laminated structure. A joining area 27a is an area joined to fix an outer frame 34a to the base 20. Note that the outer frame 34a is not included in the partial shape, and thus the outer frame 34a is removed after the laminated structure 32 is formed.

Fig. 4D illustrates a state where the machining device 4 finishes a surface of the metal plate 22a with a machining tool 28. Since the surface of the metal plate 22a is roughened by the joining processing illustrated in Fig. 4C, the second machining function 6 of the machining device 4 thinly cuts the roughened surface to make the surface flat.

Fig. 4E illustrates a state where the machining device 4 cuts the metal plate 22a thus joined with a machining tool 30 to remove an unnecessary portion other than a partial shape 31a of the first layer of the laminated structure 32 and the outer frame 34a serving as a support member. Note that the machining device 4 may perform the cutting process with the machining tool 28 illustrated in Fig. 4D, or alternatively, may perform the cutting process with a different machining tool. In this example, the outer frame 34a is left to be used for positioning and temporarily fixing the next metal plate 22b (serving as the next layer) in a process of placing the metal plate 22b. Note that when the laminated structure has high rigidity, and the partial shape 31a is wide enough to support the metal plate 22b, the outer frame 34a need not be provided, and the joining process at the joining area 27a may be omitted.

Figs. 4B to 4E described above illustrate the procedure of forming the first layer, and the partial shape 31a laminated on the base 20 constitutes a laminate-joined body 36a.

Fig. 4F illustrates a state where the metal plate 22b has been placed on the metal plate 22a by the supply device 2. Thereafter, the metal plate 22b is machined (see Fig. 4I) into a second layer of the laminated structure 32. The metal plate 22b is positioned and temporarily fixed by the outer frame 34a of the metal plate 22a.

Fig. 4G illustrates a state where the joining device 3 joins the metal plate 22b and the metal plate 22a with the joining tool 24. A joining area 26b is an area joined to the partial shape 31a of the first layer in accordance with a partial shape of the second layer of the cylinder, and a joining area 27b is an area joined to fix an outer frame 34b to the outer frame 34a.

Fig. 4H illustrates a state where the machining device 4 finishes a surface of the metal plate 22b with the machining tool 28.

Fig. 4I illustrates a state where the machining device 4 cuts the metal plate 22b thus joined with the machining tool 30 to remove an unnecessary portion other than a partial shape 31b of the second layer of the laminated structure 32 and the outer frame 34b serving as a support member.

Figs. 4F to 4I described above illustrate the procedure of forming the second layer, and the partial shape 31b is laminated on the laminate-joined body 36a, thereby forming a new laminate-joined body 36b including an additional layer laminated on the laminate-joined body 36b.

As described above, the first to third processes are repeated until the laminate-joined body becomes the final laminated structure 32.

Fig. 4J illustrates a cylinder that is the final laminated structure 32. The additive manufacturing apparatus 1 can form the laminated structure 32 having a desired shape by repeatedly performing the first to third processes and removing the outer frames built up as the support members.

The above description has been given of the basic additive manufacturing procedure, and the present discloser has recognized that there are various problems in practical use when implementing the additive manufacturing technique employing the joining method in which the base material is heated. In the following examples, a description will be given of problems that may arise in the additive manufacturing method and countermeasures.

### First Example

In the additive manufacturing apparatus 1, the joining device 3 uses the joining tool 24 to join metal plates by friction stir welding, where a hole is left at a joining end portion where the joining tool 24 is pulled out. Note that such a hole is left at the joining end portion similarly in electron beam welding, laser welding, plasma welding, and TIG welding described with reference to Figs. 2B to 2D. When this hole is left in the laminated structure 32, the hole becomes a void-like defect, which is not preferable. Therefore, it is required that the joining program set a joining path so that the joining device 3 positions the joining end portion outside each partial shape of the laminated structure 32. In the first example, the first machining function 5 of the machining device 4 cuts a metal plate to leave a region that lies outside and extends from a partial shape for the next or subsequent second process (joining process).

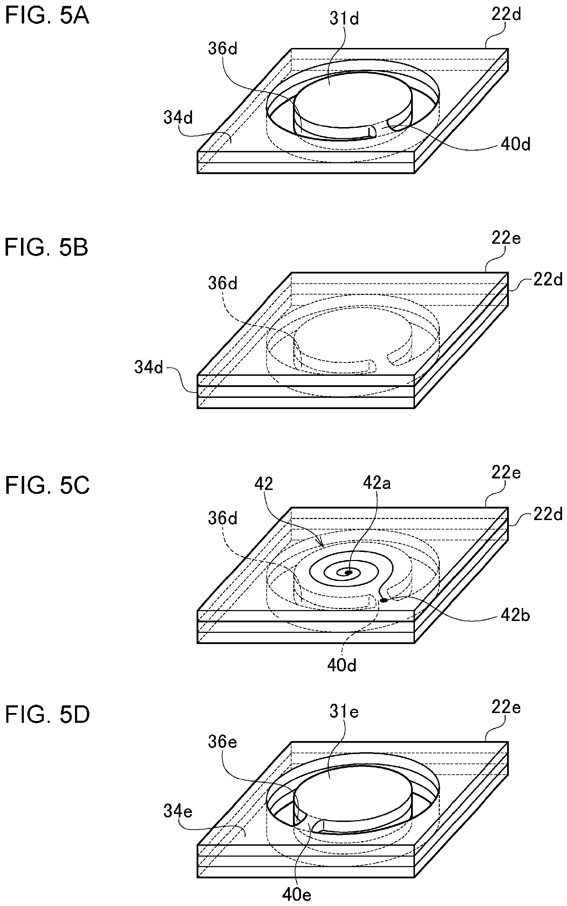

Figs. 5A to 5D are diagrams for describing the third process in the first example.

Fig. 5A illustrates a state where the machining device 4 cuts a metal plate 22d with the machining tool 30 to remove an unnecessary portion other than a partial shape 31d of the laminated structure 32, an outer frame 34d serving as a support member, and a joining end region 40d that lies outside and extends from the partial shape 31d. The partial shape 31d constitutes a shape of the uppermost layer of a laminate-joined body 36d.

The first machining function 5 of the machining device 4 cuts the metal plate 22d to leave the joining end region 40d that lies outside the partial shape 31d and includes an end position of the joining processing scheduled in the next or subsequent second process. The joining end region 40d lying outside the partial shape 31d is an originally unnecessary portion and should not be left, but is left in the current third process (cutting process) as an area to which the joining tool 24 is retreated in the next or subsequent second process (joining process) to be described later. Note that the joining end region 40d is set as a region including the path of joining processing lying outside a partial shape 31e scheduled in the next or subsequent second process.

Fig. 5B illustrates a state where a metal plate 22e has been placed on the laminate-joined body 36d by the supply device 2. The metal plate 22e is positioned and temporarily fixed by the outer frame 34d of the metal plate 22d.

Fig. 5C illustrates a state where the joining device 3 joins the metal plate 22e and the laminate-joined body 36d with the joining tool 24. A joining path 42 represents a route extending from a start position 42a to an end position 42b on the metal plate 22e along which the joining tool 24 has joined the metal plate 22e by friction stir welding. A hole is formed at the end position 42b where the joining tool 24 is pulled out. The joining path 42 in this example shows a state where the joining tool 24 has been moved in a spiral shape, but the joining processing may be performed along a different path.

In the current second process (joining process), the joining device 3 does not finish the joining processing at a position on the partial shape 31e, but finishes the joining processing at the end position 42b lying outside the partial shape 31e. This allows a hole formed when the joining tool 24 is pulled out to lie outside the partial shape 31d, not within the partial shape 31d.

The joining end region 40d left in the last third process (cutting process) allows the joining device 3 to finish the joining processing at a position on the joining end region 40d in the current second process. Note that, in the first example, the outer frame 34e may serve as the joining end region 40d, and the end position of the joining processing may be a position on the outer frame 34e. In the joining processing of the embodiment, a length of the probe is larger than a thickness of the metal plate 22e, which is not preferable for the metal plate 22e under which no joining end region 40d is present because the probe protrudes through the metal plate 22e. Therefore, the joining end region 40d is left in the last or previous cutting process, the joining end region 40d lying outside the partial shape 31e and including the path of the joining processing scheduled in the current second process, thereby allowing joining end processing to be suitably performed outside the partial shape 31e in the current second process.

Fig. 5D illustrates a state where the machining device 4 cuts the metal plate 22e thus joined with the machining tool 30 to leave the partial shape 31e of the laminated structure 32, the outer frame 34e serving as a support member, and a joining end region 40e including the path of joining processing scheduled in the next or subsequent second process. The joining end region 40e is left in the current third process as an area to which the joining tool 24 is retreated in the next or subsequent second process (joining process).

The joining end region 40e left in the current third process is provided at a position that is not aligned, in a lamination direction, with the joining end region 40d left in the last third process. This allows the joining end region 40d that is an unnecessary portion left in the last third process to be cut and removed in the current third process. Assuming that the joining end region 40d and the joining end region 40e are always provided at positions that are aligned with each other in the lamination direction, when the final laminated structure 32 is formed, the joining end regions are also built up to the same height as the laminated structure 32. At this time, a long protruding tool is required to cut and remove the joining end regions, but, even with such a tool, the joining end regions may be difficult to be removed. Therefore, the joining end region 40e to be left in the current third process and the joining end region 40d to be left in the last third process are designed to be provided at positions that are not aligned with each other in the lamination direction, so that the joining end region 40d left in the last third process can be removed by the cutting process of the current or subsequent third process.

Note that the joining end region 40e may be provided at a position that is not aligned, in the lamination direction, with a joining end region left in the last or previous third process. The joining end region left in the last or previous third process may include at least the joining end region left in the last third process, and further include joining end regions left in the third processes before the last third process.

Note that, in the third process, when the laminate-joined body including the partial shape 31e that results from cutting the metal plate 22e has low rigidity, the laminate-joined body including the partial shape 31e may be deformed or vibrated by machining force generated during cutting. Therefore, the joining end region 40d may be formed connecting the outer frame 34d and the partial shape 31d and serve as a reinforcing region for securing strength against the cutting of the metal plate 22e. The use of the joining end region 40d as a reinforcing region in the next third process allows the laminated structure 32 to be formed with high accuracy. Note that the joining end region 40d also serves as a reinforcing region in the joining process of the next second process.

Note that, in order to secure strength for the next second process and third process, the metal plate 22d may be cut to leave not only the joining end region 40d but also plural reinforcing regions that connect the outer frame 34d and the partial shape 31d in the current third process. Note that the reinforcing region to be left in the next third process and the reinforcing region to be left in the current third process are provided at positions that are not aligned with each other in the lamination direction. Therefore, the reinforcing region that is left in the current third process and is an unnecessary portion may be cut and removed in the next third process.

### Second Example

In the additive manufacturing apparatus 1, the joining device 3 uses the joining tool 24 to join metal plates by friction stir welding. When the joining device 3 joins regions near an outer periphery of the laminate-joined body by friction stir welding, the outer periphery of the laminate-joined body cannot hold a stirred portion, and a base material may flow out of a partial shape that has been formed. Note that even by electron beam welding, laser welding, plasma welding, and TIG welding described with reference to Figs. 2B to 2D, the base material may flow out of the partial shape when regions near the outer periphery of the laminate-joined body are joined. This causes not only a deviation of the outer periphery of the laminate-joined body from a design shape, but also the flow of material out to an unnecessary part, which in turn causes a shortage of material in an upper metal plate and a groove-like defect in a metal plate.

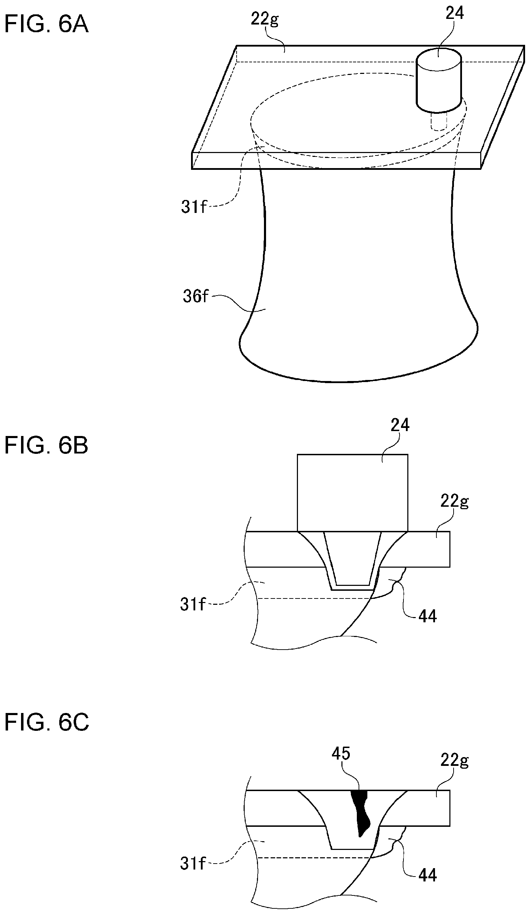

Figs. 6A to 6C are diagrams for describing a problem to be solved in the second example.

Fig. 6A illustrates a state where the joining device 3 joins a metal plate 22g and a region near an outer periphery of a laminate-joined body 36f by friction stir welding. In the last third process, as an uppermost layer of the laminate-joined body 36f, a partial shape 31f is formed.

Fig. 6B illustrates a state where material flows out to a side of the partial shape 31f by friction stir welding. In this example, an outer peripheral portion serving as a contour of the partial shape 31f is softened, and as a result, the material flows out to the side to form a spread portion 44.

Fig. 6C illustrates a groove-like defect 45 generated in the metal plate 22g due to the material that has flowed out to the spread portion 44.

As described above, when regions near the outer periphery of the laminate-joined body 36f are joined by friction stir welding, the material flows out to the side of the partial shape 31f. As a result, the partial shape 31f deviates from the design shape, and a shortage of material due to the material that has flowed out to the spread portion 44 generates the groove-like defect 45 in the metal plate 22g. In order to avoid this situation, it is necessary to suppress the flow of material to the side of the partial shape 31f. Therefore, the first machining function 5 of the machining device 4 in the second example cuts a metal plate to leave a region that lies outside and extends from the partial shape 31f for the next or subsequent second process (joining process).

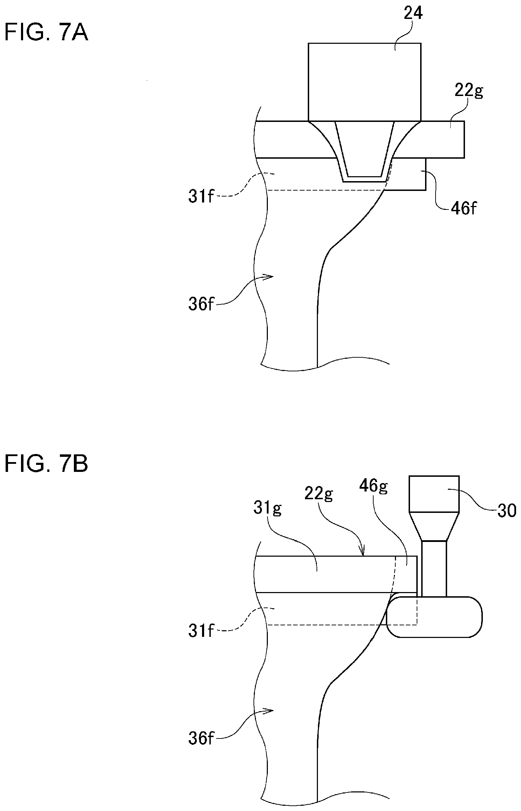

Fig. 7A illustrates a state where an excess region 46f is left on the side of the partial shape 31f of the uppermost layer of the laminate-joined body 36f. When cutting the metal plate from which the partial shape 31f is formed, the first machining function 5 of the machining device 4 cuts the metal plate to leave the excess region 46f that lies outside the partial shape 31f and outside the contour of the partial shape 31f.

The excess region 46f on the side of the partial shape 31f serves as a stopper when the joining tool 24 joins regions near the outer periphery of the laminate-joined body 36f by friction stir welding to prevent material from flowing out to the side of the partial shape 31f. This in turn makes it possible to avoid a shortage of material in the metal plate 22g and thus avoid the situation where the groove-like defect 45 is generated in the metal plate 22g.

Fig. 7B illustrates a state where the machining device 4 cuts the metal plate 22g with the machining tool 30 to leave an excess region 46g outside the partial shape 31g and, at the same time, removes the excess region 46f left in the last third process. Herein, as the machining tool 30 used for removing the excess region 46f, a T-slot cutter is used, for example. To cut the metal plate 22g, a cylindrical tool such as the machining tool 28 illustrated in Fig. 4D may be used, for example. As described above, the machining device 4 may perform the cutting process with plural types of machining tools. In the second example, the excess region 46g provided outside the contour of the partial shape suppresses the occurrence of a situation where material flows out to the side of the partial shape 31g when regions near the outer periphery of a laminate-joined body 36g are joined by friction stir welding in the next second process.

Note that the machining device 4 may cut the metal plate to leave the excess region outside the partial shape and outside the contour of the partial shape and, at the same time, remove the excess region left in the last or previous third process. The excess region left in the last or previous third process may include at least the excess region left in the last third process and further include the excess regions left in the third processes before the last third process.

As described above, the techniques described in the first and second examples are applicable to not only the configuration where the joining device 3 performs joining processing by friction stir welding, but also a different configuration where a different joining method such as electron beam welding, laser welding, plasma welding, or TIG welding is used.

### Third Example

In the additive manufacturing apparatus 1, the joining device 3 uses the joining tool 24 to join metal plates by friction stir welding. When the partial shape to be joined is larger in width than the joining tool, in order to join metal plates more firmly, it is required that the joining device 3 move the joining tool 24 all over the surface of the partial shape of the metal plate. The present discloser has recognized through an experiment that a groove-like defect is generated when the joining tool 24 is moved along a joining path that overlaps itself with a distance between the joining tool 24 and the surface of the metal plate held constant.

The present discloser has found that a groove-like defect is generated due to the following reasons.
- The FSW tool presses material that plastically flows with its shoulder surface, but part of material on the surface escapes to the side to become a burr, thereby making the surface slightly lower in height.
- When the joining path overlaps itself with an insertion depth of the FSW tool held constant, the FSW tool cannot stir material while sufficiently pressing the material with the shoulder surface because an already-joined region is slightly lower in surface height.
- The repetition of the above causes a shortage of material and insufficient stir at a certain joining area, which generates a groove-like defect.

In the third example, the joining device 3 performs a joining tool control process in which the joining processing is performed by moving the joining tool 24 that heats the metal plate and the laminate-joined body as described below.

### Tool Control On Joining Path

As described above, in the process of joining the entire surface of the partial shape, the groove-like defect is generated due to that the joining path overlaps itself. Therefore, the joining device 3 performs the joining processing by moving the joining tool 24 a plurality of times, the joining tool 24 being moved in a manner as to prevent a joining path of each movement on the metal plate and the laminate-joined body from overlapping itself. Note that, in the third example, the joining tool 24 is controlled in a manner as to prevent the joining path of each movement from overlapping itself, but joining paths of different movements are allowed to overlap each other.

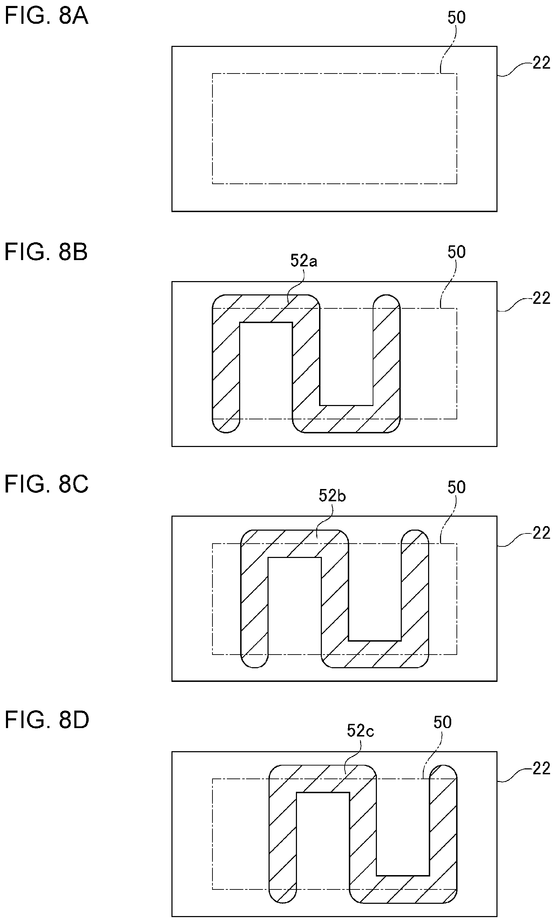

Figs. 8A to 8D are diagrams for describing joining paths of the joining device 3. Note that no consideration will be given to the joining end position described in the first example.

Fig. 8A illustrates a joining region 50 on a metal plate 22 that is fully joined.

Fig. 8B illustrates a first travel path of the joining tool 24. The joining device 3 moves the joining tool 24 in a manner as to prevent the joining path on the metal plate 22 from overlapping itself. A first path 52a represents a joining path in the first joining processing. The first path 52a is controlled to turn back at intervals larger than a shoulder width so as not to overlap itself. When the first joining processing along the first path 52a is completed, the second machining function 6 of the machining device 4 performs the surface-finishing process of cutting the surface by milling to make the surface flat.

Fig. 8C illustrates a second travel path of the joining tool 24. The joining device 3 moves the joining tool 24 in a manner as to prevent the joining path on the metal plate 22 from overlapping itself. Since the surface of the metal plate 22 is cut by milling after the first joining process, an insertion depth of the joining tool 24 is set larger by the cut amount of the surface. A second path 52b represents a joining path in the second joining processing. As with the first path 52a, the second path 52b is controlled to turn back at intervals larger than the shoulder width so as not to overlap itself. When the second joining processing along the second path 52b is completed, the second machining function 6 of the machining device 4 performs the surface-finishing process of cutting the surface by milling to make the surface flat.

Fig. 8D illustrates a third travel path of the joining tool 24. The joining device 3 moves the joining tool 24 in a manner as to prevent the joining path on the metal plate 22 from overlapping itself. Since the surface of the metal plate 22 is cut by milling after the second joining process, the insertion depth of the joining tool 24 is set larger by the cut amount of the surface. A third path 52c represents a joining path in the third joining processing. As with the first path 52a, the third path 52c is controlled to turn back at intervals larger than the shoulder width so as not to overlap itself. When the third joining processing along the third path 52c is completed, the second machining function 6 of the machining device 4 performs the surface-finishing process of cutting the surface by milling to make the surface flat.

As described above, the plurality of times of joining processing allow the entire surface of the joining region 50 to be fixed by friction stir welding.

### Tool Control On Joining Depth

As described above, in the process of joining the entire surface of the partial shape, the groove-like defect is generated due to that the insertion depth of the FSW tool is not changed when the joining path overlaps itself. Therefore, the joining device 3 makes the joining depth (insertion depth) of the joining tool 24 larger than the joining depth at an area where the joining processing has already been performed.

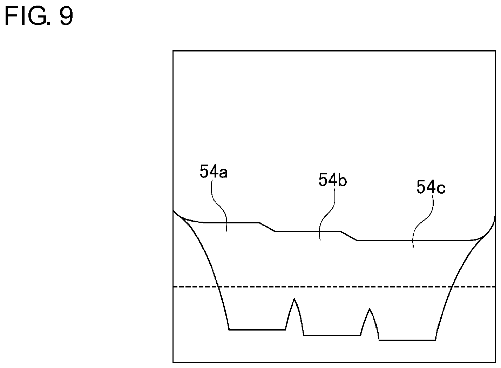

Fig. 9 illustrates joining paths that overlap each other. Fig. 9 illustrates three paths including a first path 54a, a second path 54b, and a third path 54c, in which the second path 54b overlaps the first path 54a, and the third path 54c overlaps the second path 54b.

The joining device 3 first moves the joining tool 24 along the first path 54a. Subsequently, the joining device 3 moves the joining tool 24 along the second path 54b that overlaps the first path 54a. At this time, the joining device 3 makes the insertion depth (joining depth) when moving the joining tool 24 along the second path 54b slightly larger than the insertion depth (joining depth) when moving the joining tool 24 along the first path 54a. A difference between the insertion depths may be set equal to a depth by which the surface of the metal plate 22 is reduced in height in the joining processing. As a result, the joining processing along the second path 54b allows a sufficient stir without a shortage of material and can prevent a groove-like defect from being generated. Similarly, the joining device 3 moves the joining tool 24 along the third path 54c that overlaps the second path 54b. At this time, the joining device 3 makes the insertion depth (joining depth) when moving the joining tool 24 along the third path 54c slightly larger than the insertion depth (joining depth) when moving the joining tool 24 along the second path 54b. This can prevent a groove-like defect from being generated.

As described above, the joining device 3 can suppress the generation of a groove-like defect by making the joining depth of the joining tool 24 at an area where the surface of the metal plate has already been heated larger than the joining depth along the last or previous joining path. The process of performing the joining processing by controlling the insertion depth of the joining tool 24 as described above may be applied to the process of performing the joining processing a plurality of times. For example, in the example illustrated in Figs. 8A to 8D, the joining processing is performed three times, but the insertion depth at the second time is made larger than the insertion depth at the first time, and the insertion depth at the third time is made larger than the insertion depth at the second time, allowing the joining processing along the three joining paths to be continuously performed without being interrupted by the surface-finishing process.

The present disclosure has been described on the basis of the embodiment. It is to be understood by those skilled in the art that the embodiment is illustrative and that various modifications are possible for a combination of components or processes, and that such modifications are also within the scope of the present disclosure. In the first process of the embodiment, the metal plate 22 that is a flat plate that has not been cut is placed on the laminate-joined body, but the metal plate 22 may be a plate that has been cut and machined into a shape including the excess portion.

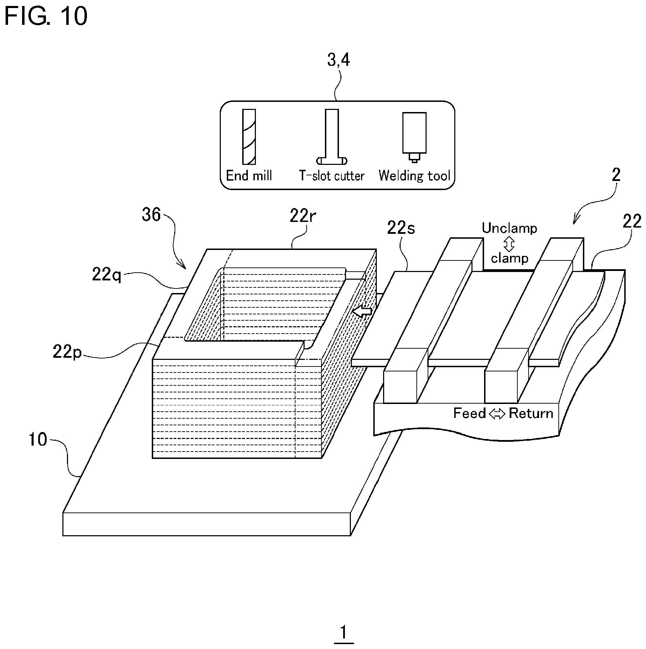

Fig. 10 illustrates a modification of the usage of the additive manufacturing apparatus 1. As with the additive manufacturing apparatus 1 described in the embodiment, an additive manufacturing apparatus 1 of the modification also repeats the lamination and machining of one metal plate each time to form a laminated structure having a desired overall shape. In the usage illustrated in Fig. 10, one layer is formed by lamination of plural metal plates on a laminate-joined body 36.

In this usage, the final laminated structure 32 is a box-like structure having a space inside, and Fig. 10 illustrates the laminate-joined body 36 under additive manufacturing. Note that the box-like structure may have a U-shaped or L-shaped cross-section with one or two sides cut out, or alternatively, may be a tubular or hollow polygonal pillar-like structure. According to the additive manufacturing procedure described in the embodiment, a large metal plate is prepared, the inside of the box is cut and removed to form a frame portion of the box, the large metal plate is joined to this frame portion, and the large metal plate is machined to leave a frame portion, thereby forming a box-like laminated structure.

However, according to this additive manufacturing procedure, since only the frame portion of the box is left, and a portion of the metal plate inside the frame portion is removed as an unnecessary portion, a lot of metal material is wasted, and it is conceivable that the waste is not acceptable in terms of cost. Therefore, in the usage illustrated in Fig. 10, one layer is formed by performing the lamination process and the machining process a plurality of times in order to reduce the loss of metal material.

As illustrated in Fig. 10, an uppermost layer of the laminate-joined body 36 is formed of four metal plate 22p, 22q, 22r, 22s. Herein, the metal plates 22p, 22q, 22r, 22s each cut, with an end mill, out of the metal plate 22 supplied from the supply device 2 and then joined to the laminate-joined body 36 may be laminated on the laminate-joined body 36. Fig. 10 illustrates a state where the metal plates 22p, 22q, 22r are placed on and joined to the uppermost layer. In this usage, the plural supply devices 2 may be provided at positions facing each side of the laminate-joined body 36, but a configuration may be employed where each time a frame of one side is formed, the table 10 is rotated by a required angle (in this case, 90 degrees), and one supply device 2 supplies the metal plate 22 to the laminate-joined body 36.

A difference from the embodiment is that the joining device 3 performs not only joining processing in the lamination direction (the plate thickness direction of the metal plate) but also joining processing in a left-right direction (the in-plane direction of the metal plate). That is, the joining device 3 of the modification forms a box-like structure by performing butt joining between plates forming one layer.

In the modification, the supply device 2 may laminate plural metal plates in the first process, and the plural metal plates thus laminated may be of different types. Heating and joining the plural layers in which the plural types of metal plates are stacked allows different types of metals to be mixed to produce an alloy or an intermetallic compound and allows the alloy or intermetallic compound to be laminated. Further, changing the type of the metal plate during repeated lamination allows a laminated structure in which the type of metal changes in the lamination direction to be built.

The outline of the present disclosure is as follows. One aspect of the present disclosure is an additive manufacturing method for forming a laminated structure including a first process of placing a metal plate on a laminate-joined body, a second process of heating the metal plate and the laminate-joined body to join the metal plate and the laminate-joined body, and a third process of machining the one or plural metal plates joined to the laminate-joined body to form a laminate-joined body including the one or plural metal plates laminated on the laminate-joined body, the first process to the third process being repeated until the laminate-joined body formed in the third process becomes the laminated structure. The third process includes a cutting process of cutting the metal plate to form a partial shape of the laminated structure. In the cutting process, the metal plate is cut to leave a region that lies outside and extends from the partial shape for the next or subsequent second process. The third process may further include a surface-finishing process of machining a surface of the metal plate joined to the laminate-joined body to make the surface flat.

In the cutting process, the metal plate may be cut to leave a joining end region that lies outside the partial shape and includes an end position of joining processing scheduled in the next or subsequent second process. The joining end region may include a path of the joining processing lying outside the partial shape, the joining processing being scheduled in the next or subsequent second process. The joining end region to be left in the current third process may be provided at a position that is not aligned, in the lamination direction, with the joining end region left in the last or previous third process, and the joining end region left in the last or previous third process may be removed by the cutting process in the current or subsequent third process.

In the cutting process, the metal plate may be cut to form the partial shape of the laminated structure while leaving at least an outer frame of the metal plate and further to leave a reinforcing region connecting the outer frame and the partial shape to secure strength.

In the cutting process, the metal plate may be cut to leave an excess region that lies outside the partial shape and outside a contour of the partial shape, and, at the same time, an excess region left in the last or previous third process may be removed.

The second process may include a joining tool control process of performing joining processing by moving a joining tool configured to heat the metal plate and the laminate-joined body. In the joining tool control process, the joining processing may be performed by moving the joining tool a plurality of times, the joining tool being moved in a manner as to prevent a joining path of each movement from overlapping itself. In the joining tool control process, the joining depth of the joining tool may be made larger than the joining depth at an area where a surface of the metal plate has already been heated.

Another aspect of the present disclosure is an additive manufacturing apparatus configured to form a laminated structure including a supply device configured to place a metal plate on a laminate-joined body, a joining device configured to heat the metal plate and the laminate-joined body to join the metal plate and the laminate-joined body, and a machining device configured to machine the one or plural metal plates joined to the laminate-joined body to form a laminate-joined body including the one or plural metal plates laminated on the laminate-joined body. The machining device may include a first machining function of cutting the metal plate to form a partial shape of the laminated structure and a second machining function of finishing a surface of the metal plate.

## Claims

1. An additive manufacturing method for forming a laminated structure (32), comprising:
a first process of placing a metal plate (22e) on a laminate-joined body (36);
a second process of joining the metal plate (22e) to the laminate-joined body (36); and
a third process of machining the one or plural metal plates (22e) joined to the laminate-joined body to form a laminate-joined body including the one or plural metal plates (22e) laminated on the laminate-joined body, the first process to the third process being repeated until the laminate-joined body formed in the third process becomes the laminated structure (32), wherein
the third process includes a cutting process of cutting the metal plate to form a partial shape of the laminated structure (32), and wherein the method is **characterized in that**,
in the cutting process, the metal plate is cut to leave a joined end region (40d) that lies outside and extends from the partial shape for a next or subsequent second process
wherein the second process includes a joining tool control process of performing joining processing by moving a joining tool (24) configured to join the metal plate (22e) and the laminate-joined body (36) by welding,
wherein in the second process, a joining path (42) represents a route extending from a start position (42a) to an end position (42b) on the metal plate (22e) along which the joining tool (24) has joined the metal plate (22e) by welding,
wherein in the second process, the joining tool (24) does not finish the joining processing at a position on the partial shape (31a), but finishes the joining processing at an end position (42b) lying outside the partial shape (31e) in the joining end region (40d).

2. The additive manufacturing method according to claim 1, wherein the third process further includes a surface-finishing process of machining a surface of the metal plate joined to the laminate-joined body to create a flat surface.

3. The additive manufacturing method according to claim 1, wherein
the joining end region (40e) to be left in a current third process is provided at a position that is not aligned, in a lamination direction, with the joining end region (40d) left in a last or previous third process, and
the joining end region (40d) left in the last or previous third process is removed by the cutting process in the current or subsequent third process.

4. The additive manufacturing method according to any one of claims 1 to 3, wherein, in the cutting process, the metal plate is cut to form the partial shape of the laminated structure (32) while leaving at least an outer frame of the metal plate, and further to leave a reinforcing region connecting the outer frame and the partial shape to secure strength.

5. The additive manufacturing method according to any one of claims 1 to 4, wherein, in the cutting process, the metal plate is cut to leave an excess region that lies outside the partial shape and outside a contour of the partial shape, and an excess region left in a last or previous third process is removed.

6. The additive manufacturing method according to claim 1, wherein, in the joining tool control process, the joining processing is performed by moving the joining tool (24) a plurality of times, the joining tool (24) being moved in a manner as to prevent a joining path on the metal plate (22) of each movement from overlapping itself.

7. The additive manufacturing method according to claim 1 or 6, wherein, in the joining tool control process, a joining depth of the joining tool (24) is made larger than the joining depth at an area where a surface of the metal plate has already been heated.

8. An additive manufacturing apparatus (1) configured to form a laminated structure (32), comprising:
a supply device (2) configured to place a metal plate (22e) on a laminate-joined body (36);
a joining device (3) configured to heat the metal plate (22e) and the laminate-joined body to join the metal plate (22e) and the laminate-joined body (36) by welding; and
a machining device (4) configured to machine the one or plural metal plates (22e) joined to the laminate-joined body (36) to form a laminate-joined body including the one or plural metal plates (22e) laminated on the laminate-joined body (36),
wherein
the machining device (4) includes
a first machining function (5) of cutting the metal plate (22e) to form a partial shape of the laminated structure (32), and
a second machining function (6) of finishing a surface of the metal plate (22a, 22b), **characterized in that** the apparatus (1) is configured to implement the method according to claim 1.

## Patentansprüche

1. Verfahren zur generativen Fertigung zum Bilden einer laminierten Struktur (32), umfassend:
einen ersten Prozess des Platzierens einer Metallplatte (22e) auf einem Laminat-gefügten Körper (36);
einen zweiten Prozess des Fügens der Metallplatte (22e) an den Laminat-gefügten Körper (36); und
einen dritten Prozess des maschinellen Bearbeitens der einen oder mehreren Metallplatten (22e), die an den Laminat-gefügten Körper gefügt sind, um einen Laminat-gefügten Körper zu bilden, der die eine oder mehreren Metallplatten (22e) einschließt, die auf den Laminat-gefügten Körper laminiert sind, wobei vom ersten Prozess bis zum dritten Prozess wiederholt wird, bis der in dem dritten Prozess gebildete Laminatgefügte Körper die laminierte Struktur (32) wird, wobei
der dritte Prozess einen Schneidprozess des Schneidens der Metallplatte einschließt, um eine Teil form der laminierten Struktur (32) zu bilden, und wobei das Verfahren **dadurch gekennzeichnet ist, dass**
die Metallplatte in dem Schneidprozess geschnitten wird, um eine gefügte Endregion (40d), die außerhalb liegt und sich von der Teilform erstreckt, für einen nächsten oder nachfolgenden zweiten Prozess zu belassen,
wobei der zweite Prozess einen Steuerprozess eines Fügewerkzeugs einschließt, um Fügeverarbeitung durchzuführen, indem ein Fügewerkzeug (24) bewegt wird, das ausgestaltet ist, um die Metallplatte (22e) und den Laminat-gefügten Körper (36) mittels Schweißen aneinander zu fügen,
wobei in dem zweiten Prozess ein Fügepfad (42) eine Wegführung wiedergibt, die sich von einer Startposition (42a) zu einer Endposition (42b) auf der Metallplatte (22e) erstreckt, entlang der das Fügewerkzeug (24) die Metallplatte (22e) mittels Schweißen gefügt hat,
wobei das Fügewerkzeug (24) in dem zweiten Prozess die Fügeverarbeitung nicht an einer Position der Teil form (31a) fertigstellt, sondern die Fügeverarbeitung an einer Endposition (42b) fertigstellt, die außerhalb der Teilform (31e) in der Fügeendregion (40d) liegt.

2. Verfahren zur generativen Fertigung nach Anspruch 1, wobei der dritte Prozess des Weiteren einen Oberflächenfertigstellungsprozess der maschinellen Bearbeitung einer Oberfläche der Metallplatte einschließt, die an den Laminat-gefügten Körper gefügt ist, um eine ebene Oberfläche zu erzeugen.

3. Verfahren zur generativen Fertigung nach Anspruch 1, wobei
die in einem aktuellen dritten Prozess zu belassene Fügeendregion (40e) an einer Position bereitgestellt wird, die in einer Laminierungsrichtung nicht mit der Fügeendregion (40d) ausgerichtet ist, die in einem letzten oder vorhergehenden dritten Prozess belassen wurde, und
die in dem letzten oder vorhergehenden dritten Prozess belassene Fügeendregion (40d) durch den Schneidprozess in dem aktuellen oder nachfolgenden dritten Prozess entfernt wird.

4. Verfahren zur generativen Fertigung nach einem der Ansprüche 1 bis 3, wobei die Metallplatte in dem Schneidprozess geschnitten wird, um die Teilform der laminierten Struktur (32) zu bilden, während mindestens ein Außenrahmen der Metallplatte belassen wird, und wobei des Weiteren eine Verstärkungsregion belassen wird, welche den Außenrahmen und die Teilform verbindet, um Festigkeit zu gewährleisten.

5. Verfahren zur generativen Fertigung nach einem der Ansprüche 1 bis 4, wobei die Metallplatte in dem Schneidprozess geschnitten wird, um eine Überschussregion zu belassen, die außerhalb der Teil form und außerhalb einer Kontur der Teilform liegt, und wobei eine Überschussregion, die in einem letzten oder vorhergehenden dritten Prozess belassen wurde, entfernt wird.

6. Verfahren zur generativen Fertigung nach Anspruch 1, wobei in dem Steuerprozess des Fügewerkzeugs die Fügeverarbeitung durchgeführt wird, indem das Fügewerkzeug (24) mehrfach bewegt wird, wobei das Fügewerkzeug (24) in einer Weise bewegt wird, um zu verhindern, dass ein Fügepfad auf der Metallplatte (22) von jeder Bewegung mit sich selbst überlappt.

7. Verfahren zur generativen Fertigung nach Anspruch 1 oder 6, wobei eine Fügetiefe des Fügewerkzeugs (24) in dem Steuerprozess des Fügewerkzeugs größer gemacht wird als die Fügetiefe an einem Bereich, wo die Oberfläche der Metallplatte bereits erhitzt worden ist.

8. Gerät zur generativen Fertigung (1), das zum Bilden einer laminierten Struktur (32) ausgestaltet ist, umfassend:
eine Zuführvorrichtung (2), die ausgestaltet ist, um eine Metallplatte (22e) auf einem Laminat-gefügten Körper (36) zu platzieren;
eine Fügevorrichtung (3), die ausgestaltet ist, um die Metallplatte (22e) und den Laminat-gefügten Körper zu erhitzen, um die Metallplatte (22e) und den Laminat-gefügten Körper (36) mittels Schweißen aneinander zu fügen; und
eine maschinelle Bearbeitungsvorrichtung (4), die zur maschinellen Bearbeitung der einen oder mehreren Metallplatten (22e) ausgestaltet ist, die an den Laminat-gefügten Körper (36) gefügt werden, um einen Laminat-gefügten Körper zu bilden, der die eine oder mehreren Metallplatten (22e) einschließt, die an den Laminat-gefügten Körper (36) laminiert sind, wobei
die maschinelle Bearbeitungsvorrichtung (4) einschließt:
eine erste maschinelle Bearbeitungsfunktion (5) des Schneidens der Metallplatte (22e), um eine Teilform der laminierten Struktur (32) zu bilden, und
eine zweite maschinelle Bearbeitungsfunktion (6) des Fertigstellens einer Oberfläche der Metallplatte (22a, 22b), **dadurch gekennzeichnet, dass** das Gerät (1) ausgestaltet ist, um das Verfahren gemäß Anspruch 1 zu implementieren.

## Revendications

1. Procédé de fabrication additive pour former une structure stratifiée (32), comprenant :
un premier processus consistant à placer une plaque métallique (22e) sur un corps assemblé en stratifié (36) ;
un deuxième processus consistant à assembler la plaque métallique (22e) au corps assemblé en stratifié (36) ; et
un troisième processus consistant à usiner la ou les plusieurs plaques métalliques (22e) assemblées au corps assemblé en stratifié pour former un corps assemblé en stratifié comprenant la ou les plusieurs plaques métalliques (22e) stratifiées sur le corps assemblé en stratifié, les premier au troisième processus étant répétés jusqu'à ce que le corps assemblé en stratifié formé dans le troisième processus devienne la structure stratifiée (32), dans lequel
le troisième processus comprend un processus de coupe consistant à couper la plaque métallique pour former une forme partielle de la structure stratifiée (32), et dans lequel le procédé est **caractérisé en ce que**,
dans le processus de coupe, la plaque métallique est coupée pour laisser une région de fin d'assemblage (40d) qui se trouve à l'extérieur de et s'étend à partir de la forme partielle pour un deuxième processus suivant ou ultérieur
dans lequel le deuxième processus comprend un processus de commande d'outil d'assemblage consistant à réaliser un traitement d'assemblage en déplaçant un outil d'assemblage (24) configuré pour assembler la plaque métallique (22e) et le corps assemblé en stratifié (36) par soudage,
dans lequel, dans le deuxième processus, un trajet d'assemblage (42) représente une trajectoire s'étendant d'une position de début (42a) à une position de fin (42b) sur la plaque métallique (22e) le long de laquelle l'outil d'assemblage (24) a assemblé la plaque métallique (22e) par soudage,
dans lequel, dans le deuxième processus, l'outil d'assemblage (24) ne termine pas le traitement d'assemblage à une position sur la forme partielle (31a), mais termine le traitement d'assemblage à une position de fin (42b) se trouvant à l'extérieur de la forme partielle (31e) dans la région de fin d'assemblage (40d).

2. Procédé de fabrication additive selon la revendication 1, dans lequel le troisième processus comprend en outre un processus de finition de surface consistant à usiner une surface de la plaque métallique assemblée au corps assemblé en stratifié pour créer une surface plane.

3. Procédé de fabrication additive selon la revendication 1, dans lequel
la région de fin d'assemblage (40e) à laisser dans un troisième processus actuel est prévue à une position qui n'est pas alignée, dans une direction de stratification, avec la région de fin d'assemblage (40d) laissée dans un dernier troisième processus ou un troisième processus précédent, et
la région de fin d'assemblage (40d) laissée dans le dernier troisième processus ou un troisième processus précédent est enlevée par le processus de coupe dans le troisième processus actuel ou ultérieur.

4. Procédé de fabrication additive selon l'une quelconque des revendications 1 à 3, dans lequel, dans le processus de coupe, la plaque métallique est coupée pour former la forme partielle de la structure stratifiée (32) tout en laissant au moins un cadre externe de la plaque métallique, et en outre pour laisser une région de renforcement reliant le cadre externe et la forme partielle pour assurer la résistance.

5. Procédé de fabrication additive selon l'une quelconque des revendications 1 à 4, dans lequel, dans le processus de coupe, la plaque métallique est coupée pour laisser une région excédentaire qui se trouve à l'extérieur de la forme partielle et à l'extérieur d'un contour de la forme partielle, et une région excédentaire laissée dans un dernier troisième processus ou un troisième processus précédent est enlevée.

6. Procédé de fabrication additive selon la revendication 1, dans lequel, dans le processus de commande d'outil d'assemblage, le traitement d'assemblage est réalisé en déplaçant l'outil d'assemblage (24) une pluralité de fois, l'outil d'assemblage (24) étant déplacé de manière à empêcher un trajet d'assemblage sur la plaque métallique (22) de chaque mouvement de se chevaucher.

7. Procédé de fabrication additive selon la revendication 1 ou 6, dans lequel, dans le processus de commande d'outil d'assemblage, une profondeur d'assemblage de l'outil d'assemblage (24) est rendue plus grande que la profondeur d'assemblage au niveau d'une zone où une surface de la plaque métallique a déjà été chauffée.

8. Appareil de fabrication additive (1) configuré pour former une structure stratifiée (32), comprenant :
un dispositif d'alimentation (2) configuré pour placer une plaque métallique (22e) sur un corps assemblé en stratifié (36) ;
un dispositif d'assemblage (3) configuré pour chauffer la plaque métallique (22e) et le corps assemblé en stratifié pour assembler la plaque métallique (22e) et le corps assemblé en stratifié (36) par soudage ; et
un dispositif d'usinage (4) configuré pour usiner la ou les plusieurs plaques métalliques (22e) assemblées au corps assemblé en stratifié (36) pour former un corps assemblé en stratifié comprenant la ou les plusieurs plaques métalliques (22e) stratifiées sur le corps assemblé en stratifié (36),
dans lequel
le dispositif d'usinage (4) comprend
une première fonction d'usinage (5) consistant à couper la plaque métallique (22e) pour former une forme partielle de la structure stratifiée (32), et
une deuxième fonction d'usinage (6) consistant à finir une surface de la plaque métallique (22a, 22b), **caractérisé en ce que** l'appareil (1) est configuré pour mettre en oeuvre le procédé selon la revendication 1.
